# EUROPEAN PATENT SPECIFICATION

(11) **EP 3 912 895 B1**
(45) Date of publication and mention of the grant of the patent: **15.06.2022**
(21) Application number: 21166263.0
(22) Date of filing: 31.03.2021
(51) Int. Cl.: B62J 45/00, B62J 9/14, B62K 11/10, B62J 43/30

(54) **STRADDLED VEHICLE**
GRÄTSCHSITZFAHRZEUG
VÉHICULE À ENFOURCHER

(30) Priority: 18.05.2020 JP 2020086527
(43) Date of publication of application: 24.11.2021
(73) Proprietor: Yamaha Hatsudoki Kabushiki Kaisha, Iwata-shi, Shizuoka 438-8501 (JP)
(72) Inventor: YAMSOM, Boonyod, 10540 Samutprakarn (TH); YAMAUCHI, Yoshinori, 10540 Samutprakarn (TH); OGAWA, Takuya, 10540 Samutprakarn (TH)
(74) Representative: Grünecker Patent- und Rechtsanwälte PartG mbB

(56) References cited:
- BR-A2- PI0 805 794
- DE-A1-102016 001 468
- JP-B2- 6 228 951
- US-B2- 7 134 706

## Description

The present invention relates to a straddled vehicle, particularly a straddled vehicle including a communication unit that performs wireless communication with a mobile communication device.

There is a type of straddled vehicle that includes a storage box below the seat (see, for example, JP-A-2009-40396). An item such as a helmet is stored in the storage box. The seat is rotatably connected to the vehicle body by a hinge. The storage box is opened by rotating the seat upward.

US 7 134 706 B2 discloses the features of the preamble of claim 1.

In recent years, some straddled vehicles are equipped with a communication unit that performs wireless communication with mobile communication devices such as smartphones. However in a straddled vehicle, a space for mounting an equipment is very limited. Therefore, by mounting the communication unit on the straddled vehicle, the straddled vehicle may become larger.

In addition, a mobile communication device is often placed in a storage pocket arranged on a leg shield. Depending on the position of the communication unit, the communication quality with the mobile communication device in the storage pocket may deteriorate. An object of the present invention is to provide a straddled vehicle that can suppress an increase in size of a straddled vehicle and to improve the communication quality between a mobile communication device and a communication unit. According to the present invention said object is solved by a straddled vehicle having the features of independent claim 1. Preferred embodiments are laid down in the dependent claims.

A straddled vehicle according to one aspect of the present teaching includes a body frame, a steering device, a front wheel, a seat, a storage pocket, a footrest (means), a storage box, a hinge, a battery compartment, a battery, a communication unit, and a communication unit compartment. The body frame includes a head pipe. The steering device is turnably supported by the head pipe. The front wheel is rotatably supported by the steering device. The seat is located behind the head pipe. The storage pocket is arranged forward of the seat. The footrest is arranged in front of and below the seat. The storage box is arranged below the seat. The hinge is arranged in front of the storage box. The hinge supports the seat so as to be movable between a closed position and an open position. The seat closes the storage box in the closed position. The seat opens the storage box in the open position. The battery compartment is arranged between the hinge and the storage box. The battery is arranged in the battery compartment. The communication unit performs wireless communication with a mobile communication device. The communication unit compartment stores the communication unit. The communication unit compartment is arranged between the hinge and the storage box. The communication unit compartment is arranged above the battery compartment. The communication unit compartment is at least partially located above an upper edge of the storage box.

In the straddled vehicle according to the present aspect, the communication unit compartment is arranged between the hinge and the storage box and above the battery compartment. Further, the communication unit compartment is at least partially located above the upper edge of the storage box. Therefore, it is possible to suppress the increase in size of the vehicle.

Since rider's feet are placed in a space between the communication unit and the storage pocket, other devices are rarely placed in the space. Therefore, the communication between the communication unit and the mobile communication device in the storage pocket is less likely to be hindered. Further, as compared with the case where the communication unit is arranged in the storage box, the communication between the communication unit and the mobile communication device in the storage pocket is less likely to be obstructed by a luggage in the storage box. Thereby the communication quality between the mobile communication device and the communication unit is improved.

As seen in a vehicle side view, the communication unit compartment may at least partially overlap with the seat. In this case, a dead space in the seat is used as a space to place the communication unit. As a result, it is possible to suppress the increase in size of the vehicle.

As seen in a vehicle top view, the communication unit compartment may at least partially overlap with the battery. In this case, a space overlapping the battery as seen in the vehicle top view is used as the space to place the communication unit. As a result, it is possible to suppress the increase in size of the vehicle.

As seen in the vehicle top view, the communication unit compartment may overlap a center line of the vehicle extending in a front-rear direction of the vehicle. In this case, a distance between the communication unit and the mobile communication device in a left-right direction of the vehicle is small. Thereby, the communication quality can be improved.

The communication unit compartment may be at least partially located at a same height as the storage pocket. In this case, good communication can be obtained between the mobile communication device in the storage pocket and the communication unit. An upper end of the communication unit compartment may be located above a lower end of the storage pocket. In this case, good communication can be obtained between the mobile communication device in the storage pocket and the communication unit.

The communication unit compartment may be a lid that covers the battery compartment from above. The communication unit compartment may include a fixing portion. The fixing portion may be located on an inner surface of the communication unit compartment. The communication unit compartment may be fixed to the fixing portion. In this case, the communication unit compartment also serves as the lid for the battery compartment. Therefore, it is possible to suppress the increase in size of the vehicle.

The communication unit may be at least partially located above the hinge. In this case, the communication between the communication unit and the mobile communication device in the storage pocket is less likely to be hindered by the hinge. Thereby the communication quality between the mobile communication device and the communication unit can be improved.

The communication unit compartment may include a bulging portion that bulges upward. The communication unit may be arranged in the bulging portion. In this case, the communication unit can be compactly arranged in the communication unit compartment.

An inner surface of the seat may include a front inner surface, a rear inner surface, and a protrusion. The front inner surface may have a shape recessed upward. The rear inner surface may be arranged behind the front inner surface. The protrusion may be arranged between the front inner surface and the rear inner surface. The bulging portion may be located below the front inner surface. In this case, a space below the front inner surface is used as a space to place the communication unit. As a result, it is possible to suppress the increase in size of the vehicle.

### BRIEF DESCRIPTION OF THE DRAWINGS

FIG. 1 is a side view of a straddled vehicle according to an embodiment.
FIG. 2 is a top view of the straddled vehicle.
FIG. 3 is a side view showing an internal structure under a seat.
FIG. 4 is a sectional view taken along line IV-IV in FIG. 2.
FIG. 5 is a sectional view taken along line V-V in FIG. 1.
FIG. 6 is a side view of the straddled vehicle in which the seat is in an open position.
FIG. 7 is a perspective view showing a part of an under-seat unit.
FIG. 8 is a top view showing a part of the under-seat unit.
FIG. 9 is an exploded perspective view of a part of the under-seat unit.
FIG. 10 is a bottom view of a communication unit compartment and a communication unit.
FIG. 11 is a bottom view of the communication unit compartment.

### DESCRIPTION OF EMBODIMENTS

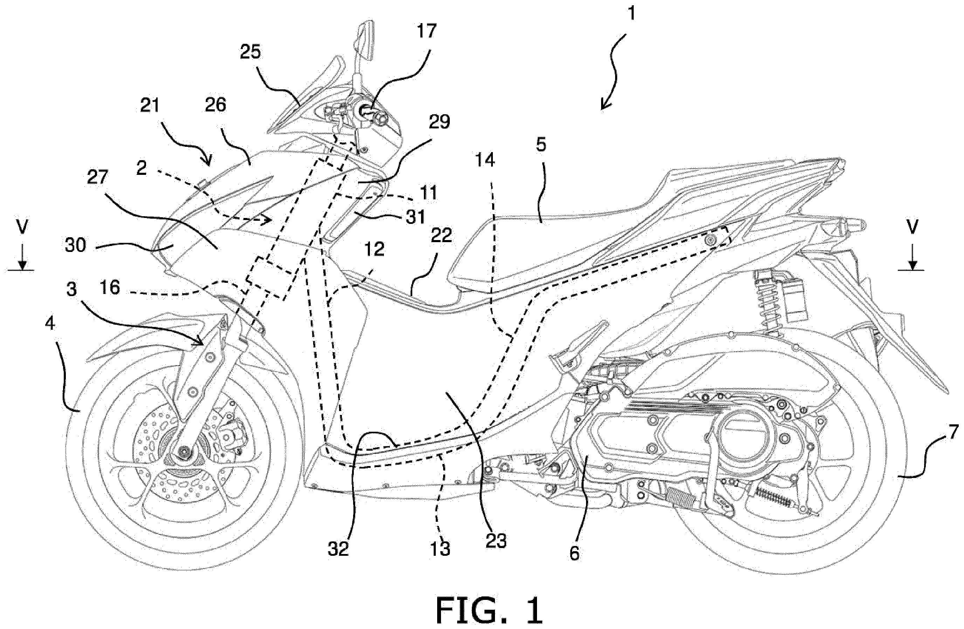

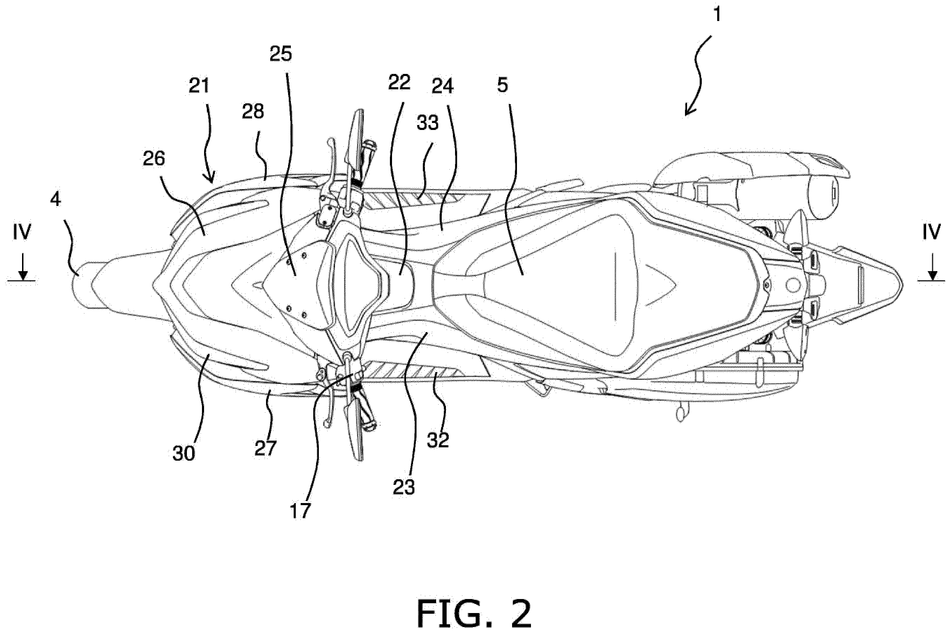

Hereinafter, a straddled vehicle according to an embodiment of the present teaching will be described with reference to the drawings. FIG. 1 is a side view of the straddled vehicle 1 according to the embodiment. FIG. 2 is a top view of the straddled vehicle 1. The straddled vehicle 1 according to the present embodiment is a scooter. As illustrated in FIG. 1, the straddled vehicle 1 includes a body frame 2, a steering device 3, a front wheel 4, a seat 5, a power unit 6, and a rear wheel 7. In the following description, the front-rear, left-right and up-down directions are defined as the directions when viewed from the rider seated on the seat 5.

The body frame 2 includes a head pipe 11, a down frame 12, a lower frame 13, and a rear frame 14. The head pipe 11 is arranged at a center of the vehicle in the left-right direction. The head pipe 11 extends forward and downward. The down frame 12 extends downward from the head pipe 11. The lower frame 13 extends rearward from a lower portion of the down frame 12. The rear frame 14 extends rearward and upward from a rear portion of the down frame 12.

The steering device 3 is turnably supported by the head pipe 11. The steering device 3 rotatably supports the front wheel 4. The steering device 3 includes a front fork 16 and a handle member 17. The front fork 16 is turnably supported by the head pipe 11. The front wheel 4 is rotatably supported by the front fork 16. The handle member 17 is operable by a rider to rotate the front wheel 4. The handle member 17 extends in the left-right direction of the vehicle.

The seat 5 is arranged behind the head pipe 11. The seat 5 is arranged above the rear frame 14. The power unit 6 is arranged below the seat 5. The power unit 6 includes, for example, an internal combustion engine. Alternatively, the power unit 6 may include an electric motor. The rear wheel 7 is rotatably supported by the power unit 6.

The straddled vehicle 1 includes a front cover 21, a center cover 22, a left side cover 23, a right side cover 24, and a handle cover 25. The front cover 21 is fixed to the body frame 2. The front cover 21 is arranged forward of the seat 5. The front cover 21 is arranged in front of, behind, left and right of the head pipe 11. The front cover 21 includes a front main cover 26, a front left cover 27, a front right cover 28, and a front back cover 29.

The front main cover 26 is arranged in front of the head pipe 11. A headlight 30 is arranged on the front main cover 26. The front left cover 27 is arranged on the left side of the head pipe 11. The front right cover 28 is arranged on the right side of the head pipe 11. The front back cover 29 is arranged behind the head pipe 11. The front cover 21 includes a storage pocket 31. The storage pocket 31 is arranged forward of the seat 5. The storage pocket 31 is arranged on the front back cover 29. The storage pocket 31 can store a mobile communication device such as a smartphone.

The handle cover 25 covers a portion of the handle member 17. The handle cover 25 is located above the front cover 21. The handle cover 25 is located above the head pipe 11. The handle cover 25, together with the handle member 17, is rotatable with respect to the front cover 21.

The center cover 22 is arranged between the front cover 21 and the seat 5. The center cover 22 extends rearward from the front back cover 29. The center cover 22 is arranged at the center of the vehicle in the left-right direction. The left side cover 23 and the right side cover 24 are arranged below the seat 5. The left side cover 23 covers the rear frame 14 from the left side. The right side cover 24 covers the rear frame 14 from the right side.

The straddled vehicle 1 includes a footrest means that comprises a left footrest 32 and a right footrest 33. The left footrest 32 and the right footrest 33 are arranged in front of and below the seat 5. The left footrest 32 projects to the left from a lower portion of the left side cover 23. The right footrest 33 projects to the right from a lower portion of the right side cover 24. The left footrest 32 and the right footrest 33 extend in the front-rear direction of the vehicle.

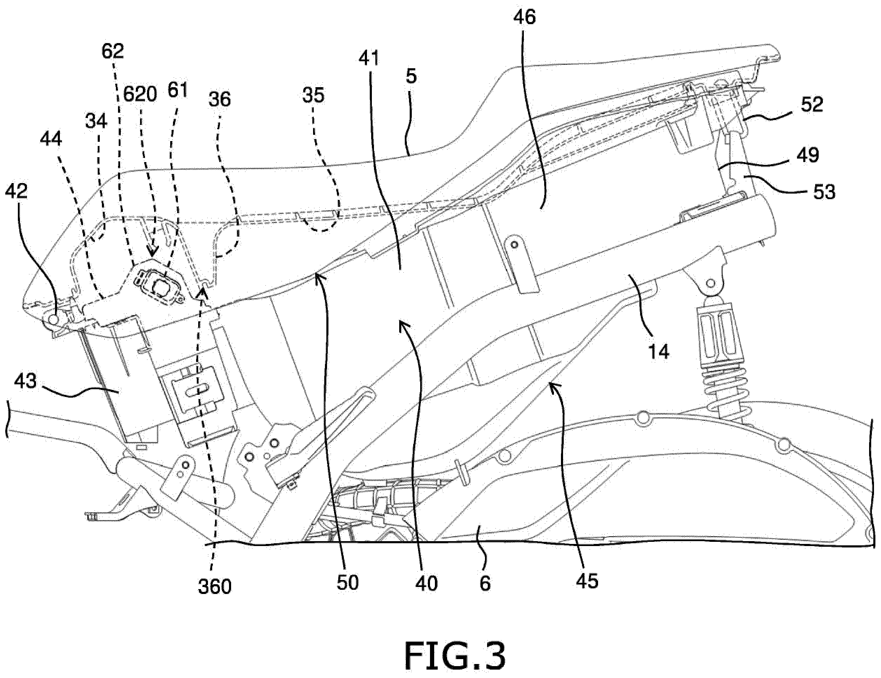

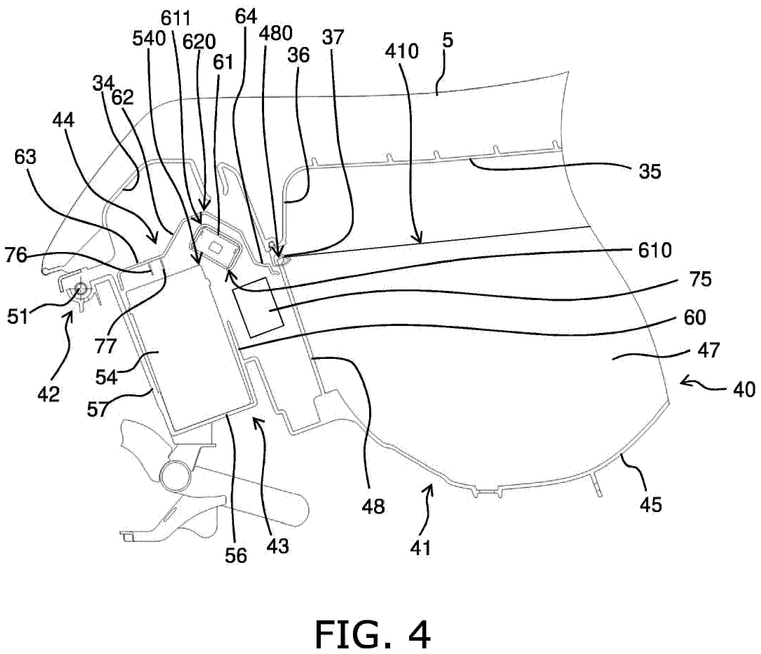

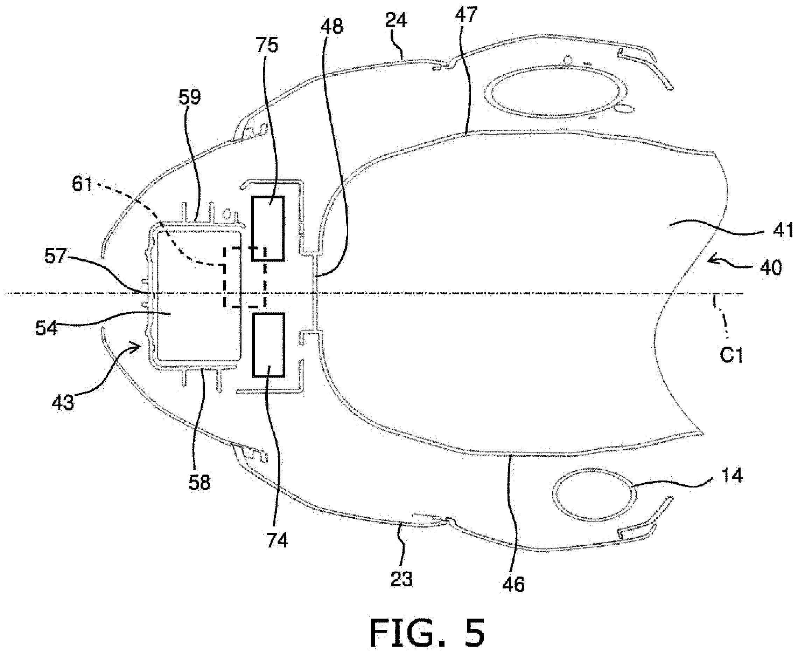

FIG. 3 is a side view showing an internal structure under the seat 5. FIG. 4 is a sectional view taken along line IV-IV in FIG. 2. FIG. 5 is a sectional view taken along line V-V in FIG. 1. As illustrated in FIG. 3, an inner surface of the seat 5 includes a front inner surface 34, a rear inner surface 35, and a protrusion 36. The inner surface of the seat 5 is a lower surface of the seat 5. The front inner surface 34 is located in front of the protrusion 36. The front inner surface 34 has a shape recessed upward. The front inner surface 34 is located above a lower edge 50 of the seat 5. The rear inner surface 35 is located behind the protrusion 36. The rear inner surface 35 has a shape recessed upward. The rear inner surface 35 is located above the lower edge 50 of the seat 5. The protrusion 36 is located between the front inner surface 34 and the rear inner surface 35. The protrusion 36 projects downward. A lower end 360 of the protrusion 36 is located above the lower edge 50 of the seat 5. As illustrated in FIG. 4, a seal member 37 is attached to the lower end 360 of the protrusion 36.

As illustrated in FIGS. 3 to 5, the straddled vehicle 1 includes the under-seat unit 40. The under-seat unit 40 is arranged below the seat 5. The under-seat unit 40 is supported by the rear frame 14. The under-seat unit 40 includes a storage box 41, a seat support portion 42, a battery compartment 43, and a communication unit compartment 44.

The storage box 41 overlaps with the seat 5 as seen in the vehicle top view. The storage box 41 is located below the rear inner surface 35 of the seat 5. The storage box 41 has a box-like shape that opens upward. The storage box 41 can store an article such as a helmet. The storage box 41 includes a bottom wall 45, a left side wall 46, a right side wall 47, a front wall 48, and a rear wall 49. The left side wall 46, the right side wall 47, the front wall 48, and the rear wall 49 extend upward from the bottom wall 45.

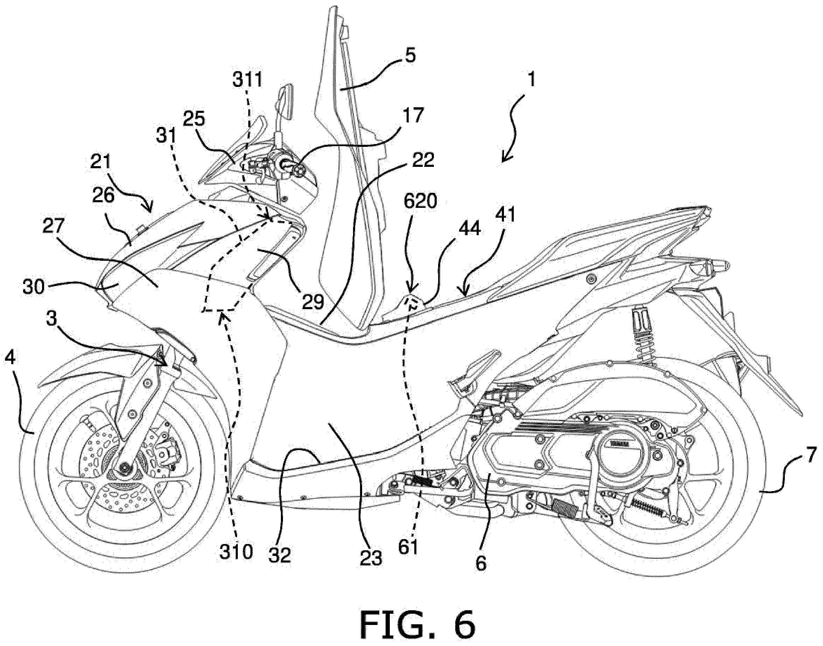

The seat support portion 42 is located at a front end of the under-seat unit 40. The seat support portion 42 supports the seat 5 via the hinge 51. The hinge 51 movably supports the seat 5 between a closed position and an open position. The hinge 51 connects a front portion of the seat 5 and the seat support portion 42. FIGS. 1 and 3 show the seat 5 in the closed position. As illustrated in FIGS. 1 and 3, the seat 5 closes the storage box 41 in the closed position. FIG. 6 is a side view of the straddled vehicle 1 in which the seat 5 is in the open position. As illustrated in FIG. 6, the seat 5 opens the storage box 41 in the open position.

The seat 5 moves to the open position and the closed position by rotating around the hinge 51. A locking portion 52 is connected to the rear portion of the seat 5. A locked portion 53 is connected to the rear frame 14. The seat 5 is fixed in the closed position by locking the locking portion 52 to the locked portion 53. As illustrated in FIG. 4, when the seat 5 is in the closed position, the protrusion 36 of the seat 5 is in contact with the front wall 48 of the storage box 41 via the seal member 37. By releasing the locking portion 52 from the locked portion 53, the rear portion of the seat 5 can rotate up and down.

The battery compartment 43 is arranged between the hinge 51 and the storage box 41. The battery compartment 43 is integrally formed with the storage box 41. The battery compartment 43 is arranged in front of the storage box 41. The battery compartment 43 and the storage box 41 are separated by the front wall 48 of the storage box 41. The battery compartment 43 is arranged below the seat 5. As seen in the vehicle top view, the battery compartment 43 overlaps with the seat 5. The battery compartment 43 is located below the front inner surface 34 of the seat 5. The battery compartment 43 is arranged behind the seat support portion 42. As seen in the vehicle top view, the battery compartment 43 has a box-like shape that opens upward. The battery 54 and the fuse boxes 74 and 75 are arranged in the battery compartment 43.

The battery compartment 43 includes a bottom surface 56, a front surface 57, a left side surface 58, a right side surface 59, and a partition wall 60. The front surface 57, the left side surface 58, the right side surface 59, and the partition wall 60 extend upward from the bottom surface 56. The partition wall 60 is arranged between the front surface 57 and the front wall 48 of the storage box 41. The partition wall 60 partitions the inside of the battery compartment 43 in the front-rear direction. The battery 54 is arranged between the partition wall 60 and the front surface 57. The fuse boxes 74 and 75 are arranged between the partition wall 60 and the front wall 48 of the storage box 41.

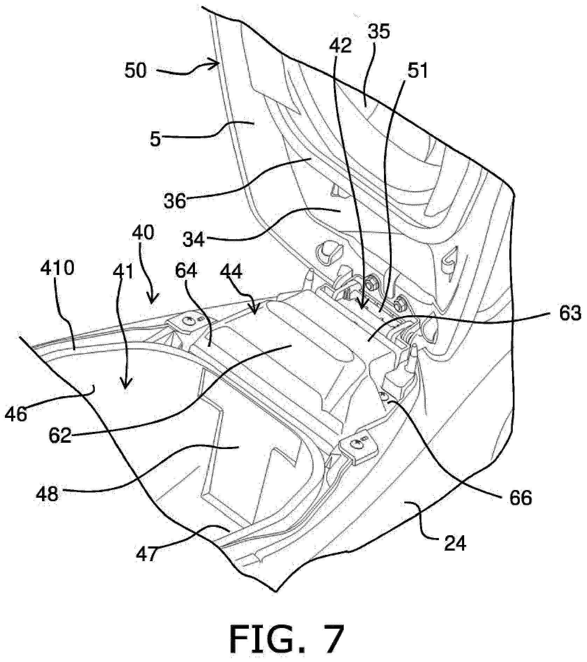

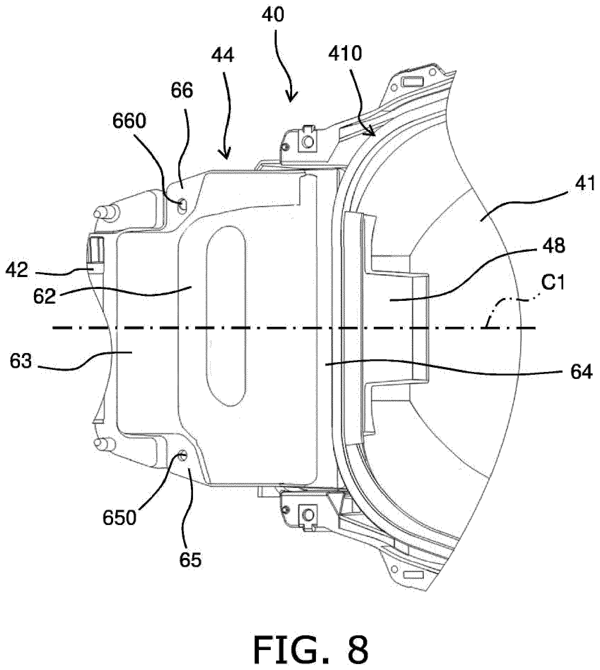

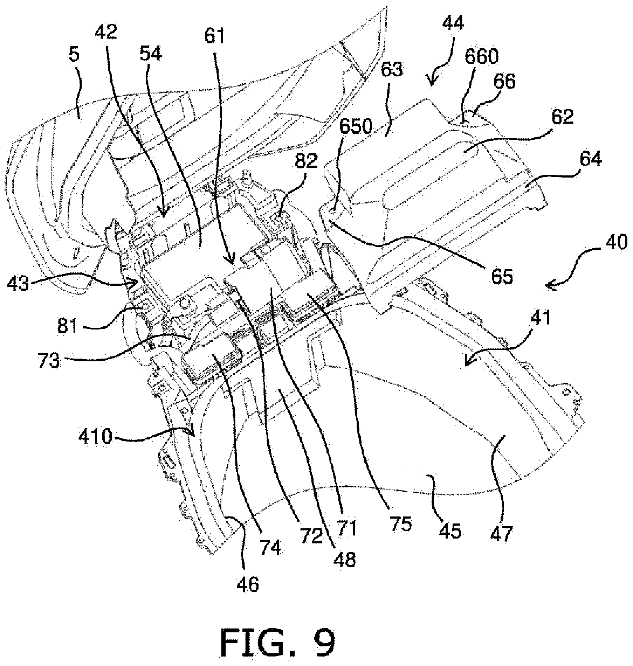

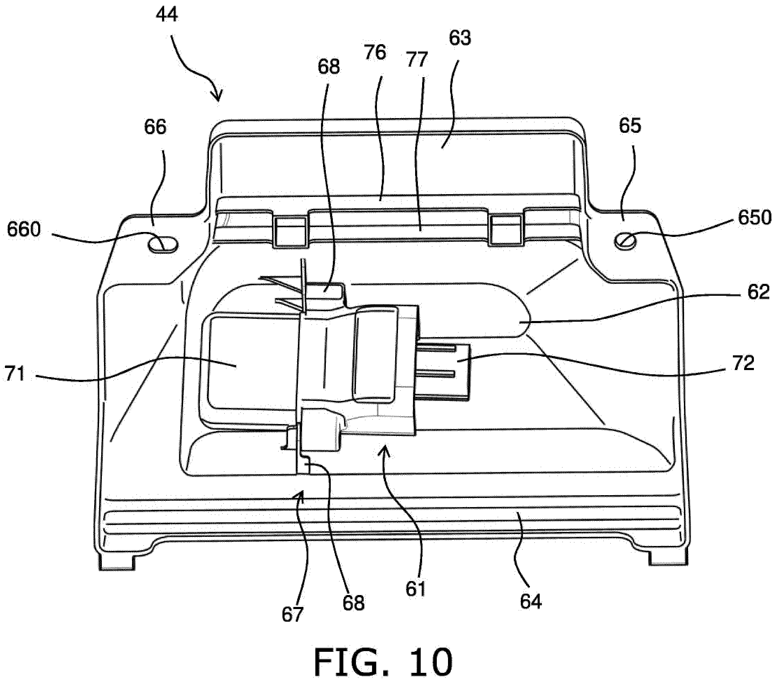

The communication unit compartment 44 stores the communication unit 61. The communication unit 61 wirelessly communicates with the mobile communication device. The communication unit 61 communicates with a mobile communication device by using, for example, a wireless communication technology such as Bluetooth (registered trademark). FIG. 7 is a perspective view showing a portion of the under-seat unit 40. FIG. 8 is a top view showing a portion of the under-seat unit 40. FIG. 9 is an exploded perspective view of a portion of the under-seat unit 40. FIG. 10 is a bottom view of the communication unit compartment 44 and the communication unit 61.

The communication unit compartment 44 is arranged between the hinge 51 and the storage box 41. The communication unit compartment 44 is arranged behind the hinge 51. The communication unit compartment 44 is arranged in front of the storage box 41. The communication unit compartment 44 is arranged above the battery compartment 43. As seen in the vehicle side view, the communication unit compartment 44 overlaps with the seat 5. As seen in the vehicle top view, the communication unit compartment 44 overlaps with the battery 54. As seen in the vehicle top view, the communication unit compartment 44 overlaps with the center line C1 of the vehicle extending in the front-rear direction of the vehicle.

The communication unit compartment 44 is separate from the battery compartment 43. The communication unit compartment 44 is a lid that covers the battery compartment 43 from above. The communication unit compartment 44 has a box-like shape that opens downward. The communication unit compartment 44 is attached to the battery compartment 43. The communication unit compartment 44 is fixed to an upper edge of the battery compartment 43 with screws. The communication unit compartment 44 is at least partially located above an upper edge 410 of the storage box 41. The communication unit compartment 44 is at least partially located above an upper end 480 of the front wall 48 of the storage box 41.

As illustrated in FIG. 4, the communication unit compartment 44 includes a bulging portion 62, a front lid portion 63, a rear lid portion 64, a left mounting portion 65, and a right mounting portion 66. The bulging portion 62 is located between the front lid portion 63 and the rear lid portion 64. The bulging portion 62 has a shape that bulges upward. The bulging portion 62 is located below the front inner surface 34 of the seat 5. A top portion 620 of the bulging portion 62 is located above the upper edge 410 of the storage box 41. The top portion 620 of the bulging portion 62 is located above the upper end 480 of the front wall 48 of the storage box 41. The front lid portion 63 is located in front of the bulging portion 62. The front lid portion 63 is located forward of the partition wall 60. The front lid portion 63 covers the battery 54 from above. The front lid portion 63 overlaps with the battery 54 as seen in the vehicle top view. The rear lid portion 64 is located behind the bulging portion 62. The rear lid portion 64 is located rearward of the partition wall 60. The rear lid portion 64 covers the fuse boxes 74 and 75 from above. As seen in the vehicle top view, the rear lid portion 64 overlaps with the fuse boxes 74 and 75.

The left mounting portion 65 is located to the left of the front lid portion 63. The right mounting portion 66 is located to the right of the front lid portion 63. A hole 650 is provided in the left mounting portion 65. A hole 660 is provided in the right mounting portion 66. The left mounting portion 65 is mounted on the battery compartment 43 by a screw passing through the hole 650 of the left mounting portion 65. The right mounting portion 66 is mounted on the battery compartment 43 by a screw passing through the hole 660 of the right mounting portion 66. As illustrated in FIG. 9, a left mounted portion 81 and a right mounted portion 82 are provided on the upper surface of the battery compartment 43. The left mounting portion 65 is mounted on the left mounted portion 81. The right mounting portion 66 is mounted on the right mounted portion 82.

The communication unit compartment 44 includes ribs 76 and 77. The ribs 76 and 77 project downward from an inner surface of the communication unit compartment 44. The ribs 76 and 77 project downward from an inner surface of the front lid portion 63. The ribs 76 and 77 are adjacent to an inner surface of the bulging portion 62. The ribs 76 and 77 extend in the left-right direction of the vehicle. The ribs 76 and 77 are located above the battery 54. The ribs 76 and 77 are arranged between the left mounting portion 65 and the right mounting portion 66.

The communication unit 61 is at least partially located above the hinge 51. As illustrated in FIG. 6, the communication unit compartment 44 is at least partially located at the same height as the storage pocket 31. An upper end of the communication unit compartment 44 (the top portion 620 of the bulging portion 62) is located above a lower end 310 of the storage pocket 31. The upper end of the communication unit compartment 44 (the top portion 620 of the bulging portion 62) is located below an upper end 311 of the storage pocket 31.

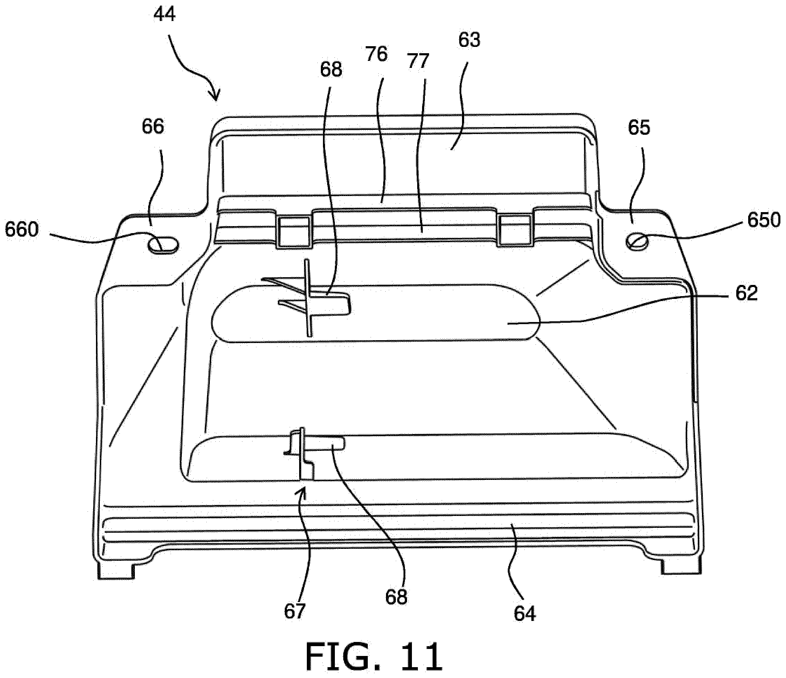

The communication unit 61 is attached to the inner surface of the communication unit compartment 44. The inner surface of the communication unit compartment 44 is a lower surface of the communication unit compartment 44 and faces a space inside the battery compartment 43. FIG. 11 is a bottom view of the communication unit compartment 44. As illustrated in FIG. 11, the communication unit compartment 44 includes a fixing portion 67. The fixing portion 67 is provided on the inner surface of the communication unit compartment 44. The fixing portion 67 is a plurality of protrusions 68 and 69 protruding from the inner surface of the communication unit compartment 44. The communication unit compartment 44 is fixed to the fixing portion 67. The communication unit compartment 44 is fixed by being sandwiched between a plurality of protrusions 68 and 69 of the fixing portion 67. The fixing portion 67 is provided on the inner surface of the bulging portion 62. The communication unit 61 is arranged in the bulging portion 62. The number of protrusions is not limited to two, and may be more than two.

The communication unit 61 is arranged so that the longitudinal direction of the communication unit 61 faces the left-right direction of the vehicle. The communication unit 61 includes a main body 71 and a connector 72. The connector 72 projects from the main body 71 in the left-right direction of the vehicle. The connector 72 is arranged so that the connection direction of the connector 72 faces the left-right direction of the vehicle. As illustrated in FIG. 9, a communication cable 73 is connected to the connector 72.

As illustrated in FIG. 3, the communication unit 61 is arranged above the lower edge 50 of the seat 5. As seen in the vehicle side view, the entire communication unit 61 is arranged above the lower edge 50 of the seat 5. As seen in the vehicle side view, the entire communication unit 61 overlaps with the seat 5. The communication unit 61 is at least partially located above the hinge 51. A lower end 610 of the communication unit 61 is located above the hinge 51. That is, the entire communication unit 61 is located above the hinge 51.

As illustrated in FIG. 4, the communication unit 61 is at least partially located above the upper end 480 of the front wall 48. The communication unit 61 is arranged to be inclined with respect to the front-rear direction. As seen in the vehicle side view, the communication unit 61 is inclined forward and upward. The lower end 610 of the communication unit 61 is located below an upper end 540 of the battery 54. An upper end 611 of the communication unit 61 is located above the upper end 540 of the battery 54. The communication unit 61 is arranged above the battery 54. The communication unit 61 is arranged above the fuse boxes 74 and 75. As illustrated in FIG. 5, the communication unit 61 overlaps with the battery 54 as seen in the vehicle top view. The communication unit 61 overlaps the fuse boxes 74 and 75 as seen in the vehicle top view.

In the straddled vehicle 1 according to the present embodiment described above, the communication unit compartment 44 is arranged between the hinge 51 and the storage box 41 and above the battery compartment 43. Further, the communication unit compartment 44 is at least partially located above the upper edge 410 of the storage box 41. Therefore, it is possible to suppress the increase in size of the vehicle.

Since rider's feet are placed in a space between the communication unit 61 and the storage pocket 31, other devices are rarely arranged in the space. Therefore, the communication between the communication unit 61 and the mobile communication device in the storage pocket 31 is less likely to be hindered. Further, as compared with the case where the communication unit 61 is arranged in the storage box 41, the communication between the communication unit 61 and the mobile communication device in the storage pocket 31 is less likely to be hindered by a luggage in the storage box 41. Thereby the communication quality between the mobile communication device and the communication unit 61 can be improved.

Although one embodiment has been described above, the present teaching not limited to the above embodiment, and various modifications can be made.

The straddled vehicle 1 is not limited to the scooter, and may be another type of vehicle such as a moped. The structure of the straddled vehicle 1 is not limited to that of the above embodiment, and may be changed. For example, the straddled vehicle 1 may include a flat footboard between the seat 5 and the front back cover 29. The flat hood board may have a flat shape in the left-right direction of the straddled vehicle 1.

The number of front wheels is not limited to one, and may be more than one. The number of rear wheels is not limited to one, and may be more than one. The structure of the body frame 2 is not limited to that of the above embodiment, and may be changed. For example, the shape of the down frame 12, the lower frame 13, or the rear frame 14 may be changed. The structure of the front cover 21 is not limited to that of the above embodiment, and may be changed.

The structure of the under-seat unit 40 is not limited to that of the above embodiment, and may be changed. For example, the storage box 41 and the battery compartment 43 may be separate bodies. The shape or arrangement of the battery compartment 43 is not limited to that of the above embodiment, and may be changed. The shape or arrangement of the communication unit compartment 44 is not limited to that of the above embodiment, and may be changed. The entire communication unit compartment 44 may be located above the upper edge 410 of the storage box 41. A portion of the communication unit 61 may be located below the hinge 51.

### REFERENCE SIGNS LIST

2: Body frame, 3: Steering device, 4: Front wheel, 5: Seat, 11: Head pipe, 31: Storage pocket, 32: Left footrest, 41: Storage box, 43: Battery compartment, 44: Communication unit compartment, 51: Hinge, 54: Battery, 61: Communication unit, 62: Bulging portion, 67: Fixing portion

## Claims

1. A straddled vehicle (1) comprising:
a body frame (2) including a head pipe (11);
a steering device (3) turnably supported by the head pipe (11);
a front wheel (4) rotatably supported by the steering device (3);
a seat (5) arranged behind the head pipe (11) with regard to a front-rear direction of the vehicle;
a storage pocket (31) located forward of the seat (5) with regard to the front-rear direction of the vehicle;
a footrest means (32, 33) arranged in front of the seat (5) with regard to the front-rear direction of the vehicle and below the seat (5) with regard to an up-down direction of the vehicle;
a storage box (41) arranged below the seat (5) with regard to the up-down direction of the vehicle;
a hinge (51) that is arranged in front of the storage box (41) with regard to the front-rear direction of the vehicle and supports the seat (5) so as to be movable between a closed position that closes the storage box (41) and an open position that opens the storage box (41);
a battery compartment (43) arranged between the hinge (51) and the storage box (41) as seen in a vehicle side view;
a battery (54) arranged in the battery compartment (43);
a communication unit (61) configured to perform wireless communication with a mobile communication device; and
a communication unit compartment (44) that stores the communication unit (61), **characterized in that**
the communication unit compartment (44) is arranged between the hinge (51) and the storage box (41) as seen in the vehicle side view,
the communication unit compartment (44) is arranged above the battery compartment (43) with regard to an up-down direction of the vehicle, and
the communication unit compartment (44) is at least partially arranged above an upper edge of the storage box (41) with regard to the up-down direction of the vehicle.

2. The straddled vehicle (1) according to claim 1, wherein as seen in the vehicle side view, the communication unit compartment (44) at least partially overlaps with the seat (5).

3. The straddled vehicle (1) according to claim 1 or 2, wherein as seen in a vehicle top view, the communication unit compartment (44) at least partially overlaps with the battery (54).

4. The straddled vehicle (1) according to any one of claims 1 to 3, wherein as seen in the vehicle top view, the communication unit compartment (44) overlaps with a center line (C1) of the vehicle extending in the front-rear direction of the vehicle.

5. The straddled vehicle (1) according to any one of claims 1 to 4, wherein the communication unit compartment (44) is at least partially arranged at a same height as the storage pocket (31) with regard to the up-down direction of the vehicle.

6. The straddled vehicle (1) according to any one of claims 1 to 5, wherein an upper end of the communication unit compartment (44) is arranged above a lower end of the storage pocket (31) with regard to the up-down direction of the vehicle.

7. The straddled vehicle (1) according to any one of claims 1 to 6, wherein the communication unit compartment (44) is a lid that covers the battery compartment (43) from above, and
the communication unit compartment (44) includes a fixing portion (67) provided on an inner surface of the communication unit compartment (44) and to which the communication unit compartment (44) is fixed.

8. The straddled vehicle (1) according to any one of claims 1 to 7, wherein the communication unit (61) is at least partially arranged above the hinge (51) with regard to the up-down direction of the vehicle.

9. The straddled vehicle (1) according to any one of claims 1 to 8, wherein the communication unit compartment (44) includes a bulging portion (62) that bulges upward with regard to the up-down direction of the vehicle, and
the communication unit (61) is arranged in the bulging portion (62).

10. The straddled vehicle (1) according to claim 9, wherein an inner surface of the seat (5) includes
a front inner surface (34) having an upwardly concave shape with regard to the up-down direction of the vehicle,
a rear inner surface (35) arranged behind the front inner surface (34) with regard to the front-rear direction of the vehicle, and
a protrusion (36) arranged between the front inner surface (34) and the rear inner surface (35) as seen in the vehicle side view, and
the bulging portion (62) is arranged below the front inner surface (34) with regard to the up-down direction of the vehicle.

11. The straddled vehicle (1) according to any one of claims 1 to 10, wherein the footrest means comprises a left footrest (32) and a right footrest (33) with regard to a left-right direction of the vehicle.

## Patentansprüche

1. Ein Spreiz-Sitz-Fahrzeug (1), das umfasst:
einen Körper-Rahmen (2), der ein Kopf-Rohr (11) beinhaltet;
eine Lenk-Vorrichtung (3), die drehbar durch das Kopf-Rohr (11) gelagert ist;
ein Vorder-Rad (4), das drehbar durch die Lenk-Vorrichtung (3) gelagert ist;
einen Sitz (5), der hinter dem Kopf-Rohr (11) in Bezug auf eine Front-Rück-Richtung des Fahrzeugs angeordnet ist;
ein Stau-Fach (31), das vor dem Sitz (5) in Bezug auf die Front-Rück-Richtung des Fahrzeugs angeordnet ist;
eine Fuß-Ablage-Einrichtung (32, 33), die vor dem Sitz (5) in Bezug auf die Front-Rück-Richtung des Fahrzeugs und unter dem Sitz (5) in Bezug auf die Auf-Ab-Richtung des Fahrzeugs angeordnet ist;
einen Stau-Kasten (41), der unterhalb des Sitzes (5) in Bezug auf die Auf-Ab-Richtung des Fahrzeugs angeordnet ist;
ein Scharnier (51), das vor dem Stau-Kasten (41) in Bezug auf die Front-Rück-Richtung des Fahrzeugs angeordnet ist und den Sitz (5) lagert, so dass er zwischen einer geschlossenen Position, in welcher der Stau-Kasten (41) geschlossen ist, und
einer offenen Position, in welcher der Stau-Kasten (41) geöffnet ist, bewegbar ist;
ein Batterie-Fach (43), das zwischen dem Scharnier (51) und dem Stau-Kasten (41) angeordnet ist, wie in einer Seitenansicht des Fahrzeugs gesehen;
eine Batterie (54), die in dem Batterie-Fach (43) angeordnet ist;
eine Kommunikations-Einheit (61), die konfiguriert ist, um eine drahtlose Kommunikation mit einer mobilen Kommunikations-Vorrichtung durchzuführen; und ein Kommunikations-Einheit-Fach (44), das die Kommunikations-Einheit (61) aufnimmt, **dadurch gekennzeichnet, dass**
das Kommunikations-Einheit-Fach (44) zwischen dem Scharnier (51) und dem Stau-Kasten (41) angeordnet ist, wie in der Seitenansicht des Fahrzeugs gesehen,
das Kommunikations-Einheit-Fach (44) oberhalb des Batterie-Fachs (43) in Bezug auf eine Auf-Ab-Richtung des Fahrzeugs angeordnet ist, und
das Kommunikations-Einheit-Fach (44) zumindest teilweise oberhalb einer Oberkante des Stau-Kastens (41) in Bezug auf die Auf-Ab-Richtung des Fahrzeugs angeordnet ist.

2. Das Spreiz-Sitz-Fahrzeug (1) gemäß Anspruch 1, wobei in der Seitenansicht des Fahrzeugs sich das Kommunikations-Einheit-Fach (44) zumindest teilweise mit dem Sitz (5) überlappt.

3. Das Spreiz-Sitz-Fahrzeug (1) gemäß Anspruch 1 oder 2, wobei in der Draufsicht auf das Fahrzeug sich das Kommunikations-Einheit-Fach (44) zumindest teilweise mit der Batterie (54) überlappt.

4. Das Spreiz-Sitz-Fahrzeug (1) gemäß irgendeinem der Ansprüche 1 bis 3, wobei in der Draufsicht auf das Fahrzeug sich das Kommunikations-Einheit-Fach (44) mit einer Mittel-Linie (C1) des Fahrzeugs überlappt, die sich in der Front-RückwärtsRichtung des Fahrzeugs erstreckt.

5. Das Spreiz-Sitz-Fahrzeug (1) gemäß irgendeinem der Ansprüche 1 bis 4, wobei das Kommunikations-Einheit-Fach (44) zumindest teilweise auf der gleichen Höhe wie das Stau-Fach (31) in Bezug auf die Auf-Ab-Richtung des Fahrzeugs angeordnet ist.

6. Das Spreiz-Sitz-Fahrzeug (1) gemäß irgendeinem der Ansprüche 1 bis 5, wobei ein oberes Ende des Kommunikations-Einheit-Fachs (44) oberhalb eines unteren Endes des Stau-Fachs (31) in Bezug auf die Auf-Ab-Richtung des Fahrzeugs angeordnet ist.

7. Das Spreiz-Sitz-Fahrzeug (1) gemäß irgendeinem der Ansprüche 1 bis 6, wobei das Kommunikations-Einheit-Fach (44) ein Deckel ist, der das Batterie-Fach (43) von oben abdeckt, und
das Kommunikations-Einheit-Fach (44) einen Befestigungs-Abschnitt (67) beinhaltet, der an einer Innenfläche des Kommunikations-Einheit-Fachs (44) vorgesehen ist und an dem das Kommunikations-Einheit-Fach (44) befestigt ist.

8. Das Spreiz-Sitz-Fahrzeug (1) gemäß irgendeinem der Ansprüche 1 bis 7, wobei die Kommunikations-Einheit (61) zumindest teilweise oberhalb des Scharniers (51) in Bezug auf die Auf-Ab-Richtung des Fahrzeugs angeordnet ist.

9. Das Spreiz-Sitz-Fahrzeug (1) gemäß irgendeinem der Ansprüche 1 bis 8, wobei das Kommunikations-Einheit-Fach (44) einen Wölbungs-Abschnitt (62) beinhaltet, der sich in Bezug auf die Aufwärts-Abwärts-Richtung des Fahrzeugs nach oben wölbt, und
die Kommunikations-Einheit (61) in dem Wölbungs-Abschnitt (62) angeordnet ist.

10. Das Spreiz-Sitz-Fahrzeug (1) gemäß Anspruch 9, wobei eine Innenfläche des Sitzes (5) beinhaltet
eine vordere Innenfläche (34), die eine nach oben konkave Form in Bezug auf die Auf-Ab-Richtung des Fahrzeugs hat,
eine hintere Innenfläche (35), die hinter der vorderen Innenfläche (34) in Bezug auf die Front-Rück-Richtung des Fahrzeugs angeordnet ist, und
einen Vorsprung (36), der zwischen der vorderen Innenfläche (34) und der hinteren Innenfläche (35) angeordnet ist, gesehen in der Seitenansicht des Fahrzeugs, und der Wölbungs-Abschnitt (62) in unterhalb der vorderen Innenfläche (34) Bezug auf die Auf-Ab-Richtung des Fahrzeugs angeordnet ist.

11. Das Spreiz-Sitz-Fahrzeug (1) gemäß irgendeinem der Ansprüche 1 bis 10, wobei die Fuß-Ablage-Einrichtung eine linke Fuß-Ablage (32) und eine rechte Fuß-Ablage (33) in Bezug auf eine Links-Rechts-Richtung des Fahrzeugs umfasst.

## Revendications

1. Véhicule à enfourcher (1) comprenant :
un châssis de carrosserie (2) comportant un tube de tête (11) ;
un dispositif de direction (3) supporté de manière tournante par le tube de tête (11) ;
une roue avant (4) supportée de manière rotative par le dispositif de direction (3) ;
un siège (5) agencé derrière le tube de tête (11) par rapport à la direction avant-arrière du véhicule ;
une poche de stockage (31) située devant le siège (5) par rapport à la direction avant-arrière du véhicule ;
un moyen de repose-pied (32, 33) agencé devant le siège (5) par rapport à la direction avant-arrière du véhicule et sous le siège (5) par rapport à la direction haut-bas du véhicule ;
un coffre de stockage (41) agencé sous le siège (5) par rapport à la direction haut-bas du véhicule ;
une charnière (51) agencée devant le coffre de stockage (41) par rapport à la direction avant-arrière du véhicule et supportant le siège (5) de manière mobile entre une position fermée qui ferme le coffre de stockage (41) et une position ouverte qui ouvre le coffre de stockage (41) ;
un compartiment de batterie (43) agencé entre la charnière (51) et le coffre de stockage (41) en vue latérale du véhicule ;
une batterie (54) agencée dans le compartiment de batterie (43) ;
une unité de communication (61) configurée pour mettre en œuvre une communication sans fil avec un dispositif de communication mobile ; et
un compartiment d'unité de communication (44) qui stocke l'unité de communication (61),
**caractérisé en ce que**
le compartiment d'unité de communication (44) est agencé entre la charnière (51) et le coffre de stockage (41) en vue latérale du véhicule,
le compartiment d'unité de communication (44) est agencé au-dessus du compartiment de batterie (43) par rapport à la direction haut-bas du véhicule, et
le compartiment d'unité de communication (44) est agencé au moins partiellement au-dessus d'un bord supérieur du coffre de stockage (41) par rapport à la direction haut-bas du véhicule.

2. Véhicule à enfourcher (1) selon la revendication 1, dans lequel, en vue latérale du véhicule, le compartiment d'unité de communication (44) chevauche au moins partiellement le siège (5).

3. Véhicule à enfourcher (1) selon la revendication 1 ou 2 dans lequel, en vue du dessus du véhicule, le compartiment d'unité de communication (44) chevauche au moins partiellement la batterie (54).

4. Véhicule à enfourcher (1) selon l'une quelconque des revendications 1 à 3 dans lequel, en vue du dessus du véhicule, le compartiment d'unité de communication (44) chevauche une ligne centrale (C1) du véhicule qui s'étend en direction avant-arrière du véhicule.

5. Véhicule à enfourcher (1) selon l'une quelconque des revendications 1 à 4, dans lequel le compartiment d'unité de communication (44) est agencé au moins partiellement à la même hauteur que la poche de stockage (31) par rapport à la direction haut-bas du véhicule.

6. Véhicule à enfourcher (1) selon l'une quelconque des revendications 1 à 5, dans lequel une extrémité supérieure du compartiment d'unité de communication (44) est agencée au-dessus d'une extrémité inférieure de la poche de stockage (31) par rapport à la direction haut-bas du véhicule.

7. Véhicule à enfourcher (1) selon l'une quelconque des revendications 1 à 6, dans lequel le compartiment d'unité de communication (44) est un couvercle qui recouvre le compartiment de batterie (43) par le dessus, et
le compartiment d'unité de communication (44) comprend une portion de fixation (67) pourvue sur une surface interne du compartiment d'unité de communication (44) et à laquelle est fixé le compartiment d'unité de communication (44) .

8. Véhicule à enfourcher (1) selon l'une quelconque des revendications 1 à 7, dans lequel l'unité de communication (61) est agencée au moins partiellement au-dessus de la charnière (51) par rapport à la direction haut-bas du véhicule.

9. Véhicule à enfourcher (1) selon l'une quelconque des revendications 1 à 8, dans lequel le compartiment d'unité de communication (44) comprend une portion saillante (62) qui ressort vers le haut par rapport à la direction haut-bas du véhicule, et
l'unité de communication (61) est agencée dans la portion saillante (62).

10. Véhicule à enfourcher (1) selon la revendication 9, dans lequel une surface interne du siège (5) comprend
une surface interne avant (34) présentant une forme concave vers le haut par rapport à la direction haut-bas du véhicule,
une surface interne arrière (35) agencée derrière la surface interne avant (34) par rapport à la direction avant-arrière du véhicule, et
une protubérance (36) agencée entre la surface interne avant (34) et la surface interne arrière (35) en vue latérale du véhicule, et
la portion saillante (62) est agencée sous la surface interne avant (34) par rapport à la direction haut-bas du véhicule.

11. Véhicule à enfourcher (1) selon l'une quelconque des revendications 1 à 10, dans lequel le moyen de repose-pied comprend un repose-pied gauche (32) et un repose-pied droit (33) par rapport à la direction gauche-droite du véhicule.
